(19) Europäisches Patentamt

European Patent Office

Office européen des brevets

(11) EP 1 728 437 A1

(12) EUROPEAN PATENT APPLICATION
published in accordance with Art. 158(3) EPC

(43) Date of publication:
06.12.2006 Bulletin 2006/49

(51) Int Cl.:
A23G 9/32 (2006.01)    A23L 1/19 (2006.01)

(21) Application number: 04807925.5

(22) Date of filing: 27.12.2004

(86) International application number:
PCT/JP2004/019570

(87) International publication number:
WO 2005/063039 (14.07.2005 Gazette 2005/28)

(84) Designated Contracting States:
AT BE BG CH CY CZ DE DK EE ES FI FR GB GR
HU IE IS IT LI LT LU MC NL PL PT RO SE SI SK TR

(30) Priority: 26.12.2003  JP 2003434173
17.02.2004  JP 2004039272

(71) Applicant: Fuji Oil Company, Ltd.
Osaka-shi,
Osaka 542-0086 (JP)

(72) Inventors:
• TSUJII, Setsuo,
Fuji Oil Company, Limited
Tsukuba-gun, Ibaraki 3002436 (JP)

• KIYOHARA, Yuko,
Fuji Oil Company, Limited
Tsukuba-gun, Ibaraki 3002436 (JP)
• SAITO, Tsutomu,
Fuji Oil Company, Limited
Izumisano-shi, Osaka 5988540 (JP)

(74) Representative: Hayes, Adrian Chetwynd
Boult Wade Tennant,
Verulam Gardens
70 Gray's Inn Road
London WC1X 8BT (GB)

(54) CREAMS, WHIPPED PRODUCTS THEREOF, DRY POWDERS THEREOF AND PROCESS FOR PRODUCING THE SAME

(57)    It is intended mainly to provide creams not restricted in flavor which are excellent in whipping properties under acidic conditions (in particular, in a pH region shifting toward the acidic side from the isoelectric point but not being extremely acidic) and free from any problems in physical properties (i.e., capable of giving whipped products which have smooth texture and excellent shape-retention) and can fully utilize the refreshing flavor of fruit acids, etc. Secondarily, it becomes possible to provide vegetable plants obtained from vegetable materials alone, whipped products thereof or dry powders thereof. Namely, creams obtained by using acid-soluble soybean protein without resort to nonfat solid milk, acid-soluble milk whey protein or stabilizer in solidifying milk.

**Description**

Technical Field

The present invention relates to cream, particularly, cream excellent in whipping properties under acidic conditions, and whipped and dried powdery products thereof.

Background Art

According to Japanese ministerial ordinance of Ministry of Health and Welfare for milk products, frozen dessert containing milk solids is classified into ice cream, ice milk and lacto-ice according to milk solid contents.
On the other hand, according to the ministerial ordinance of Health and Welfare, frozen dessert having a milk solid content of less than 3% is prescribed as iced dessert such as ice bar and sherbet in which fruit juice is frozen.
Milk solids, particularly, non-fat milk solids contained in frozen dessert such as ice cream impart whipping properties to a cream mix to be used as a raw material, thereby providing shape-retention and a smooth mouthfeel to the mix by means of whipping (rising overrun). In contrast, while iced dessert containing no or less no-fat milk solids is characterized by iciness of ice crystals, it has an inferior smooth mouthfeel because of difficulty in incorporation of air.
Frozen dessert containing milk solids has a milky flavor. However, when it is used together with a flavoring material having a strong acidic taste, or fruits such as citrus fruits, e.g., lemon, and pineapple, etc., texture becomes unstable and a product having smooth mouthfeel and good shape-retention is hardly obtainable. Therefore, there are few products with fruit flavors and such products, if any, are limited to sweet products with flavors having less acidic tastes such as banana, strawberry, melon, and the like. And, the flavors of a strong acidic taste or fruits have poor compatibility with a milky flavor, and typical flavors having compatibility with a milky flavor are limited to vanilla, chocolate and strawberry. On the contrary, iced dessert containing no or less milk solids can be used together with the above-mentioned acidic taste materials and fruits in addition to a milk flavor, thereby providing pleasant refreshing feelings of fruit flavors. However, iced dessert has a hard mouthfeel with poor smoothness and shape-retention because air is not incorporated, while it provides pleasant iciness of icing crystals. Further, when ice crystals become too large, iced dessert increases its hardness and is hard to eat. Then, the addition of a stabilizer is inevitable for preventing this. However, the addition of a stabilizer causes problems such as stickiness, a prolonged aftertaste, a heavy mouthfeel, and the like, and further consumers tend to avoid such products. Further, since iced dessert contains no or less fatty components, in general, it tends to lack body such as that of the above-mentioned frozen dessert containing milk solids.
Although soft ice cream is eaten at a temperature different from that of frozen ice cream, soft ice cream also contains milk solids and has the same problems derived from milk solids, that is, problems of whipping properties and overrun (incorporation of air) and shape-retention, a smooth mouthfeel, and a flavor under acidic conditions.
Patent Document 1 discloses a process for preparing acidic soft ice cream with a fermented milk flavor. However, this requires many stabilizers such as pectin, propylene glycol alginate and soybean polyacid-soluble soybean proteins for stabilizing a soft ice cream mix, and further its flavor is limited.
Whipped cream also has problems such as an undesirable increase in consistency (so-called "bote") and a decrease in whipping function under acidic conditions. In addition, even though whipped cream could be whipped by using milk whey (hereinafter, sometimes, referred to as milk whey or simply whey) protein as acidic soluble protein, there are such problems that overrun is decreased and cream after whipping tends to become firmer.
For example, there are whipped cream containing a mixture of casein protein and milk whey protein, to which modified starch is added as a stabilizer (Patent Document 3), whipped cream to which water-soluble hemicellulose is added (Patent Document 4), and the like. While either of these needs a stabilizer for imparting acid resistance, there still remains such problems that flavors and emulsion stability are insufficient and overrun is decreased. As an example of whipped cream which does not require a stabilizer as an essential component, there is whipped cream containing milk whey protein, in which the content of salts is lowered to improve the stability under acidic conditions (Patent Document 5). Although most of them employ milk whey protein having relatively high stability under acidic conditions as a milky raw material, sufficient function is not obtained. Further, since a milky flavor is imparted due to the milky raw material, such whipping cream is rather unsuitable for a case where a refreshing flavor such as a fruity flavor without a milky flavor is required.
While whipped cream includes synthesized cream (filled cream), in which vegetable fats are used for a part or all of fat components, in addition to so-called fresh cream, in which a fat component is only milk fat, physical properties thereof depends basically on milk solids, and flavors are limited to monotonous fresh cream-like and chocolate flavors. In addition, Patent Document 6 discloses a process for producing acidic whipped cream using a specific emulsifier together, but the quality and flavor are hardly said to be sufficient.
Cloudy-imparting cream (cloudy cream), an emulsified flavor and cooking cream to be used for the purpose of imparting cloudiness or flavors to originally clear beverages, soup and jelly are also the same oil-in-water type emulsion as the above-mentioned cream. Although these products do not need the above-mentioned whipping properties, their use is limited due to a sharp flavor and poor compatibility with a milky flavor because they are used in a strong acidic region (pH of about 2) to increase the solubility of milk protein. Then, a technique of using thickening polysaccharides in a large amount instead of milk solids could be conceived, but such a technique generally has a tendency to deteriorate a mouthfeel and is undesirable because of the necessity of indication of polysaccharides used.

In addition, recently, vegetable ice cream-like iced dessert in which soybean milk is used instead of milk has also been developed in view of diversification of tastes and healthiness of consumers. However, flavors thereof are limited to those in neutral to weak acidic ranges.

Patent Document 1: JP 2000-014325 A

Patent Document 2: WO 02/67690

Patent Document 3: JP 8-154612 A

Patent Document 4: JP 6-78704 A

Patent Document 5: JP 2000-262236 A

Patent Document 6: JP 60-54635 A

Disclosure of the Invention

Problem to be Solved by the Invention

The present inventors have made various studies with aiming at whether acidic cream free from the above-mentioned problems can be obtained without relying on milk solids, in particular, non-fat milk solids, acidic soluble milk whey protein, a stabilizer in solidifying milk, and the like. A main object of the present invention is to provide cream which is not restricted to specific flavors under acidic conditions, and is excellent in whipping properties under acidic conditions, in particular, in a pH region of more acidic than the isoelectric point but not being extremely acidic, and free from any problems in physical properties.

In addition, according to the present invention, it is possible to provide vegetable cream (imitation cream) obtained from vegetable materials alone and its whipped or dried powdery product.

Means for Solving the Problem

The present inventors have found that acid-soluble soybean protein is different from conventional non-fat milk solids and milk whey protein (including whey protein concentrate (WPC) type and whey protein isolate (WPI) type) as acidic soluble protein derived from milk in that it has a lot of whipping properties under acidic conditions and is not restricted to specific flavors, unlike, thereby completing the present invention.

That is, the present invention is:

(1) Acidic whipping cream, or its whipped or dried powdery product comprising as an essential component acid-soluble soybean protein;
(2) The cream, or its whipped or dried powdery product according to (1), further comprising acidic taste substance;
(3) The cream according to (1), wherein the cream or its whipped product is ice cream, soft ice cream, whipped cream, cloudy cream or cooking cream;
(4) The dried powdery product according to (1), wherein the dried powdery product is that of high fat type, powdered whip type or powdered cream type;
(5) The cream, or its whipped or dried powdery product according to (1), wherein pH is 2.0 to 4.5;
(6) The cream, or its whipped or dried powdery product according to (5), wherein pH is 2.5 to 4.3; and
(7) A process for producing acidic cream, or its whipped or dried powdery product which comprises subjecting a homogenized mixture of an aqueous phase and an oil phase, containing acid-soluble soybean protein to heat sterilization.

Effect of the Invention

According to the present invention, it is possible to obtain acidic cream free from any problems caused by acidity, which exhibit whipping properties and can fully utilize refreshing acidic flavors of fruits, whipped products having smoothness and shape-retention comparable to whipped neutral cream, and dried powdery products rehydratable to cream free from any problems caused by acidity, which exhibit the above-mentioned advantages in flavors and whipping properties.

Best Mode for Carrying Out the Invention

"Cream" and "ice cream" used in the present invention refer to creamy oil-in-water type compositions whose essential component are not milk solids, as with "cream" and "ice cream" prescribed by ordinances or rules, but are acid-soluble soybean protein, inclusive of such cream having the same oil contents and water contents as those of neutral milky cream.

Acid-soluble soybean protein in the present invention is soybean protein having solubility (as described hereinafter) at pH 4 or lower of 60% or higher, and the solubility is increased as lowering pH.

The production process of the acid-soluble soybean protein is not specifically limited. For example, a solution containing soybean protein is heat-treated in a pH region of more acidic than the isoelectric point of the protein at a temperature of higher than 100°C to obtain acid-soluble soybean protein having solubility at a pH of 4.0 or lower of 60% or higher. Further, soybean protein having solubility of 60% or higher even in a pH region of 4.0 to 4.5 can be obtained according to the production process of Patent Document 2.

The production process of Patent Document 2 is characterized by subjecting a solution containing soybean protein to a treatment for increasing the positive surface charge of soybean protein particles in an acidic region. Specifically, for example, there are the following treatments in an acidic range, (A) a treatment for removing or inactivating a polyanionic substance of a protein raw material origin such as phytic acid in the solution, e.g., decomposition and removal of phytic acid in soy beans by phytase, etc., (B) a treatment by addition of a polycationic substance such as chitosan to the solution, or a combination of (A) and (B). By these treatments, solubility of soybean protein under acidic conditions can be increased and whipping properties can be improved. In this case, it is particularly preferred to subject a protein solution to a heat treatment at a temperature of higher than 100°C in a region of more acidic than pH of the isoelectric point of the protein after carrying out the above-mentioned treatment, thereby obtaining acid-soluble soybean protein having higher solubility and higher transparency under acidic conditions with less precipitation during storage.

Herein, soybean protein as the raw material for acid-soluble soybean protein is not specifically limited as far as it contains soybean protein, and can be appropriately selected from soybean milk (irrespective of whole or defatted, the same reference follows), acid precipitation curd of soybean milk, soybean protein isolate, soybean flour or soybean ground material, or those materials to which water is added where necessary.

In the present invention, different from non-fat milk solids and milk whey protein, acid-soluble soybean protein imparts high whipping properties and heat stability to cream mix and increases overrun thereof, thereby providing smoothness and shape-retention to whipped products. Herein, smoothness is a soft mouthfeel of whipped products and can be recognized as softness when crushed by tongue and teeth, and easiness of spooning out in case of frozen dessert. The exact opposite of smoothness is a brittle and hard mouthfeel of iced dessert and recognized as texture which is hardly spooned out. Shape-retention means the properties of maintaining the shape and form of whipped products when squeezed out. Poor shape-retention causes whipped products to easily flag when squeezed out.

The content of acid-soluble soybean protein in cream is in a range of about 0.2 to 10% by weight. When the content is too low, the effect resulted from the use of acid-soluble soybean protein is insufficient. On the other hand, when the content is too high, gelation is apt to be caused by heating and a continuous heat treatment becomes difficult.

While the optimum range of this content varies somewhat depend on a particular purpose of cream, in case where frozen dessert is desired, the content of acid-soluble soybean protein is preferably 0.5 to 8% by weight, and in case where whipped cream is desired, the content of acid-soluble soybean protein is preferably 0.5 to 6% by weight, preferably 1.0 to 4.0% by weight. When the content is too low, whipping properties of cream becomes insufficient and whipped products have poor shape-retention. However, the content of 0.2 to 0.5% is sufficient in case where whipping properties are not sought. As the content becomes higher, body is increased because cream can contain a larger amount of fats and oils. However, when the content becomes too high, viscosity of the mix increases, thereby deteriorating workability. Then, the above range can provide whipped products having smoothness and sufficient shape-retention.

While acid-soluble soybean protein alone exhibits the sufficient function as a protein component in cream of the present invention, it may be used together with other protein raw materials such as milk whey protein, skim milk powder, whole milk powder, fermented milk and decomposition products of various proteins. In case of using acid-soluble soybean protein together with other protein raw materials, the content of acid-soluble soybean protein of at least 5% by weight or more, preferably 20% by weight or more, more preferably 50% by weight or more based on the total protein results in good workability during whipping and good texture and shape-retention of whipped cream.

The oil phase of cream of the present invention is mainly composed of fats and oils, and can freely be selected depending on desired flavor and physical properties and its kind is not specifically limited. In case where whipped cream is desired, fats and oils having a melting point of 5°C or higher, preferably about 15 to 40°C, are suitable, and in case where frozen dessert is desired, fats and oils having a lower melting point than this can be used because whipping temperature is low. The origin of fats and oils is not specifically limited, and examples thereof include coconut oil, palm oil, rapeseed oil, cocoa butter, etc., but among which lauric fats and oils such as coconut oil/palm kernel oil, etc., or a mixture thereof with palm oil or palm mid fraction is particularly preferable. On the other hand, in addition, when essential oils such as orange oil, lemon oil, etc. are used, the cream can be used as emulsified flavors. When the oil phase is of fish oil origin such as tuna essential oil and sardine essential oil containing polyvalent unsaturated fatty acids such as DHA and EPA, cream can be used as functional emulsified compositions.

When fats and oils having emulsifying capability such as egg yolk oil, etc., the amount of another emulsifying agent to be used can be decreased or there is no need to use another emulsifying agent. However, in order to provide sufficient whipping properties to the cream of the present invention, it is preferable to add an emulsifying agent having not only emulsifying capability but also demulsifying capability. Emulsifying agents which have been used only under neutral conditions can also be used, and soybean lecithin and egg yolk lecithin, enzyme decomposed and hydrogenated products thereof, or so-called synthetic emulsifying agents such as sucrose fatty acid ester, glycerin fatty acid ester, sorbitan fatty acid ester, polyglyceryl fatty acid ester, propylene glycol ester, monoglyceride and organic acid monoglyceride can also be used together.

By using vegetable fats and oils, the cream of the present invention can be prepared in the form of pure vegetable imitation cream. However, animal fats and oils such as milk fat may be contained unless one sticks to the use of vegetable fats and oils. The content of fats in creams varies somewhat depending upon particular use of cream. In case where frozen dessert is desired, fats and oils are added in an amount of, usually, 2 to 15% by weight, more frequently 4 to 13% by weight. In case where whipped cream is desired, fats and oils are added in an amount of 10 to 60% by weight, more frequently 15 to 50% by weight.

When the cream is used for ice cream, soft ice cream and whipped cream, usually, sugars are also added. Sugars impart sweetness and, at the same time, they increase a solid content and are useful for improving shape-retention. In order to control sweetness, a solid content is increased by using sugars having low sweetness. Sugars are not specifically limited and, in addition to sucrose, maltose, fructose, glucose, inverted sugar, mixed liquid sugar, starch syrup, dextrin, sugar alcohol, sweeteners having high sweetness such as aspartame and stevia can be used for imparting only sweetness.

The acidic cream of the present invention has a pH of 4.5 or lower, preferably 2.0 to 4.5, more preferably 2.5 or higher, further more preferably 3 to 4.3, thereby providing appropriate sourness and a pleasant refreshing feeling. When a pH is 2.5 or lower, sourness is somewhat too stimulating.

Preferably, the acidic cream of the present invention can contain acidic taste agents.

The acidic taste agents include fruit juices, pulp, vegetable juices, yogurt, fermented milk, sour cream, flavors thereof, organic acids such as lactic acid, citric acid, etc., acidifying agents, and the like. As the flavors of these agents, in addition to those used in conventional ice cream such as yogurt, strawberry, banana, etc., agents having strong acidic tastes such as citrus fruits, e.g., orange, grapefruit, lemon, yuzu (Citrus junos), mandarin orange, etc., grapes, e.g., Kyoho (a kind of large purple-black grapes), muscat, etc., pineapple, kiwi, mango, passion fruit, berries, e.g., blueberry, raspberry, etc., prune, apple, acerola, tomato, and the like can also be freely selected. Acidified mixed juices of vegetable juices and fruit juices such as those obtained by adding fruit juices, e.g., lemon, etc. to non-acidic juices of vegetable such as carrot, kale, etc., can also be used.

While the acidic cream of the present invention can be obtained without stabilizers, stabilizes may be added in such a small amount that they do not adversely affect the desired physical properties. Examples of the stabilizers to be used include agar, guar gum, tamarind seed polysaccharides, karaya gum, gum tragacanth, gum Arabic, pullulan, gellan gum, carrageenan, xanthan gum, locust bean gum, furcellaran, pectin, sodium alginate, CMC, methyl cellulose (MC), hydroxyethyl cellulose (HEC), propylene glycol alginate, polysaccharides such as modified starch a representative example thereof being soluble starch, water-soluble hemicellulose, and the like. In addition, salts, flavors, colorants, preservatives and the like can also be used. Minerals such as calcium, magnesium, etc., vitamins such as water-soluble vitamins, fat-soluble vitamins, etc., dietary fiber, and the like can also be added for strengthening nutrients.

The acidic cream of the present invention is acidic, but the cream is excellent in heat resistance even under such severer conditions as those of heat sterilization, and can be readily subjected to heat sterilization. Accordingly, its production process is characterized by subjecting a homogenized mixture of an aqueous phase and an oil phase containing acid-soluble soybean protein to heat sterilization.

Then, any conventional known production processes of cream can be employed except for the addition of acid-soluble soybean protein. The acid-soluble soybean protein as the essential component in the present invention may be in the form of powder, solution, etc., and its form is not specifically limited. In case of powder, the acid-soluble soybean protein may be dissolved in an aqueous solvent such as water, etc. beforehand, or may be added to water together with other raw materials with stirring. As far as the same dissolution state as that by this method can be obtained, a dissolution method is not specifically limited. Addition timing is not limited, either, but the acid-soluble soybean protein should be added before homogenization.

Next, a standard production process of the cream of the present invention will be explained hereinafter, but the production process is not limited thereto.

A cream mix is prepared by mixing and dissolving acid-soluble soybean protein, sugars, fats and oils, acidic taste agents, and where necessary, emulsifying agents, stabilizers, acidulants, flavors, pigments, salts, water, and the like. In this case, the powdery materials are mixed beforehand and added so as to avoid formation of undissolved lumps, thereby improving workability. In case of adding a powdery material alone, sufficient stirring conditions should be set. Although dissolving temperature is not limited, 50 to 80°C are preferable.

The mix dissolved by warming is homogenized and then pasteurized or sterilized. The homogenizing step is occasionally carried out after heat sterilization. There are two kinds of sterilization treatments, one is an indirect heating system and the other is a direct heating system. Examples of an apparatus for an indirect heating system include APV plate-type UHT treatment apparatus (manufactured by APV), CP-UHT sterilization apparatus (manufactured by Crimaty Package), Stork tubular-type sterilization apparatus (manufactured by Stork), Consum scraped UHT sterilization apparatus (manufactured by Tetrapack Alphalabel), and the like, though the apparatus is not limited thereto. Examples of an direct heating sterilization apparatus include UHT sterilization apparatuses such as ultra-high temperature sterilization apparatus (manufactured by Iwai Kikai Kogyo), Uperization sterilization apparatus (manufactured by Tetrapack Alphalabel), VTIS sterilization apparatus (manufactured by Tetrapack Alphalabel), Ragear UHT sterilization apparatus (manufactured by Ragear), Paralyzator (manufactured by Pasch and Schilkeyvogue), and the like. Any of these apparatuses may be used.

After completion of sterilization and homogenization, so-called aging step, that is, a step for immediately cooling the resulting mixture to a temperature of 0 to 5°C and temporarily storing preferably for 5 to 24 hours is carried out. By this aging, components in the mix are in harmony with each other and stabilized. In case where frozen dessert is desired, freezing is carried out after completion of aging. Freezing is a step for rapidly cooling the mix by a freezer and incorporating air therein while freezing water, thereby dispersing minute air, gas cells, ice crystals and fat particles into the mix to prepare semi-fluid soft ice cream. In case of ice cream, this is further filled and packed into a suitable vessel, and then frozen rapidly to a temperature of -20 to -40°C. This is subjected to a hardening step by keeping at this temperature for more than one night to obtain the desired end products.

In case where whipped cream is desired, overrun (its measuring method is described hereinafter) is an index of quality of whipped cream. When overrun is too low, whipped cream becomes harder, thereby resulting poor workability and a heavy mouthfeel. When overrun is too hard, shape-retention is apt to be deteriorated. Usually, overrun of 80 to 150% is suitable for whipped cream. If desired, good shape-retention can be imparted even where overrun is about 250% by using polysorbate as an emulsifying agent.

Of course, the cream after heating can be used as such. Further, the cream can also be made into dried powdery products for improving convenience in utilization (such as to be capable of being freely mixed with other powdery raw materials, and being easily dispersed into moisture in food) and storability. In this case, preferably, the emulsified composition thus obtained is dried and powdered at a pH of 4.5 or lower. The composition before drying can also be appropriately selected in accordance with the desired products such as a high fat type product having fat content of 50 to 80%, a powdered whip type product having fat content of 45 to 60%, a powdered cream type product having fat content of 15 to 50%, and the like. When the pH during drying exceeds 4.5, it is undesirable because low solubility of the resulting powder is caused in case of preparing acidic food and drink by re-dissolving it in an aqueous phase. A drying method is not specifically limited, but, usually, spray drying is suitable.

In case where the cream of the present invention is used as cloudy-imparting agents, emulsifying flavors, or for the purpose of flavoring, enriching, etc., by mixing it with other food and drink, preferably, an oil-in-water type emulsified composition or a powdery product thereof is previously prepared by the above-mentioned method and then mixed with other food and drink according to appropriate methods.

Hereinafter, the analytical methods used in the present invention will be illustrated.

Solubility (%): An aqueous solution of a sample of 1% by weight was adjusted to a given pH, and the total protein content of the aqueous solution and the protein content of a supernatant fraction after centrifugation at 8,000 G for 5 minutes were measured by Kjeldahl method to calculate solubility as the ratio of the protein content of the supernatant fraction to the total protein content of the aqueous solution.

Average particle diameter: The median diameter of a mix was measured in a manual batch type cell measurement mode with a laser diffraction type particle size distribution measuring apparatus LA-500 (manufactured by Horiba, Ltd.).

Overrun: Air is incorporated in ice cream with freezing to increase its volume. Overrun is the increased volume as compared with the volume of a mix.

$$\text{(weight of mix stock - weight of ice cream of the same}$$
$$\text{volume after freezing)/weight of ice cream of the same}$$
$$\text{volume after freezing} \times 100$$

For example, in case where 1 L of a mix became 1.8 L after freezing, OR (overrun) = 80.
In case of whipped cream, overrun was calculated from the following equation.

$$\text{Overrun: [(weight of cream of given volume)} - \text{(weight}$$
$$\text{of whipped product of given volume after whipping)]} \div$$
$$\text{(weight of whipped product of given volume after whipping)}$$
$$\times 100$$

Whipping time: an oil-in-water type emulsion (1 kg) was whipped by a Hobart mixer (MODEL N-5, manufactured by Hobart Corporation) in the third speed (300 rpm) to measure the time to reach an optimum whipping state.
Graining time: The time from the above-mentioned optimum whipping state to the transformation of cream into butter was measured.
Hereinafter, the present invention will be exemplified by Examples and Comparative Examples, but is not limited thereto. All the percents are by weight unless otherwise stated.

Examples

Production Example 1

To 5 kg of low denatured defatted soybean (nitrogen solubility index (NSI): 91) obtained by pressing soybeans and extracting, separating and then removing oil therefrom with n-hexane as the extraction solvent was added 35 kg of water. The mixture was adjusted to pH 7 with a dilute sodium hydroxide solution and extracted with stirring at room temperature for 1 hour, followed by centrifugation at 4,000 G to separate "okara (soy pulp)" and insolubles to obtain defatted soybean milk. This defatted soybean milk was adjusted to pH 4.5 with phosphoric acid, followed by centrifugation at 2,000 G with a continuous centrifugal separator (decanter) to obtain an insoluble fraction (acid precipitation curd) and a soluble fraction (whey). Water was added to the acid precipitation curd so that the solid content thereof was 10% by weight to obtain acid precipitation curd slurry. This was adjusted to pH 4.0 with phosphoric acid and then warmed up to a temperature of 40°C. Phytase (manufactured by Novo) corresponding to 8 units per solids was added to this solution and the mixture was subjected to enzymatic reaction for 30 minutes (phytic acid content of 0.04% by weight/solids, TCA solubilization rate had no substantial change). After completion of the reaction, this solution was adjusted to pH 3.5 and heated with a continuous direct heating sterilization apparatus at a temperature of 120°C for 15 seconds. This was spray-dried to obtain 1.5 kg of acid-soluble soybean protein powder. The solubility of this protein was 90% even at pH 4.5.

Examples 1 to 3

The acid-soluble soybean protein obtained in the above-mentioned Production Example 1 was used to obtain ice cream-like and soft ice cream-like frozen dessert of the formulation as shown in Table 1.

Table 1

| | Example 1 | Example 2 | Example 3 | Comparative Example 5 |
|---|---|---|---|---|
| Material names | Blending (%) | Blending (%) | Blending (%) | Blending (%) |
| Acid-soluble soybean protein | 1.0 | 0.5 | 5.0 | - |

(continued)

| | Example 1 | Example 2 | Example 3 | Comparative Example 5 |
|---|---|---|---|---|
| Material names | Blending (%) | Blending (%) | Blending (%) | Blending (%) |
| Isolated milk serum protein | - | 0.5 | - | 1.0 |
| Coconut oil | 10.0 | 10.0 | 10.0 | 10.0 |
| Lemon fruit juice | 12.0 | 12.0 | 12.0 | 12.0 |
| Granulated sugar | 18.0 | 18.0 | 18.0 | 18.0 |
| Glucose | 4.5 | 4.5 | 4.5 | 4.5 |
| Water | up to 100% | up to 100% | up to 100% | up to 100% |

That is, powdery raw materials were first subject to powder mixing and poured into a mixture of coconut oil melted by warming to a temperature of 60°C and water. In addition, the mixture was heated to a temperature of 70°C and stirred to dissolve for 15 minutes. Then, the mixture was homogenized with homogenizer at 1 MPa and thereafter heat-treated by a UHT plate sterilizer at a temperature of 120°C for 15 seconds. Then, the sterilized mix was cooled to a temperature of 5°C and subject to aging in a refrigerator for 20 hours to obtain a cream mix. One kg of the mix thus obtained was subject to freezing in a commercially available freezer (MIZONO-45 ice cream & sherbet machine, manufactured by Cosmic Production Aicoh Inc.) for 40 minutes to obtain soft ice cream-like frozen dessert. This was filled into a paper vessel and hardened at a temperature of -25°C for one night to obtain ice cream-like frozen dessert.

Comparative Example 1

According to the same manner as that in Example 1, an ice cream mix was prepared except for adding no acid-soluble soybean protein. However, this mix could not be used because of separation even though homogenizer treatment was carried out.

Comparative Example 2

According to the same manner as that in Example 1, an ice cream mix was prepared except for replacing the acid-soluble soybean protein with soybean protein isolate (FUJIPRO CLE: manufactured by Fuji Oil Co., Ltd.). However, this mix could not be used because of separation even though homogenizer treatment was carried out.

Comparative Example 3

According to the same manner as that in Example 1, an ice cream mix was prepared except for replacing the acid-soluble soybean protein with water-soluble soybean polysaccharides (SOYAFIVE-S-DN: manufactured by Fuji Oil Co., Ltd.). However, this mix could not be used because of separation even though homogenizer treatment was carried out.

Comparative Example 4

According to the same manner as that in Example 1, an ice cream mix was prepared except for replacing the acid-soluble soybean protein with casein sodium (SUNLACT S12: manufactured by Taiyo Kagaku Co., Ltd.). However, this mix could not be used because of separation even though homogenizer treatment was carried out.

Comparative Example 5

According to the same manner as that in Example 1, ice cream-like and soft ice cream-like frozen dessert were obtained except for replacing the acid-soluble soybean protein with isolated milk serum protein (SUNLACT N5: manufactured by Taiyo Kagaku Co., Ltd.).
The results of evaluation of ice cream prepared under the above conditions are shown in Table 2. Incidentally, the evaluation of shape-retention in Table 2 was conducted only for soft ice cream before hardened by evaluating whether the form was maintained without flagging when squeezed out of a freezer.

Table 2

| | Example 1 | Example 2 | Example 3 | Comparative Example 5 |
|---|---|---|---|---|
| Mix state | Favorable | Favorable | Favorable | Favorable |
| pH | 3.0 | 3.0 | 3.0 | 3.0 |
| Shape-retention of soft ice cream | Favorable | Favorable | Favorable | Poor |
| Overrun | 75 | 50 | 106 | 35 |
| Food feeling of ice creams | Smooth and somewhat light | Smooth and profound | Smooth and light | Iced dessert-like brittle and hard |
| Flavor | Refreshing flavor of lemon and body were observed | Refreshing flavor of lemon and body were observed | Refreshing flavor of lemon and body were observed | Milky flavor and poor refreshing flavor of lemon were observed |

Example 4

The acid-soluble soybean protein obtained in Production Example 1 was used to prepare ice cream-like frozen dessert with the formulation of Table 1 except for changing the amounts of the acid-soluble soybean protein and coconut oil to 0.2% by weight and 4.0% by weight, respectively. The state of the mix was favorable with no separation, and the frozen dessert obtained had a refreshing flavor of lemon and an ice cream-like smooth mouthfeel, though body was somewhat decreased.

Example 5

The acid-soluble soybean protein obtained in the above-mentioned Production Example 1 was used to obtain an acidic oil-in-water type emulsion with the formulation shown in Table 3. The fat used was composed of fractionated palm oil in an amount of 23% based on the total amount and hydrogenated coconut oil in an amount of 22% based on the total amount. Although Table 3 does not show, soybean lecithin (manufactured by Tsuji Oil Co., Ltd.) in an amount of 0.2%, sucrose fatty acid ester (trade name: RYOTO SUGAR ESTER S-570, manufactured by Mitsubishi-Kagaku Foods Corporation. abbreviated as SE in the table shown hereinafter) in an amount of 0.2% and water up to 100% of the total amount were contained. The soybean lecithin was admixed with and dissolved in the fat to prepare an oil phase. Separately, the acid-soluble soybean protein powder and the sucrose fatty acid ester powder were mixed and the mixture was added to and dissolved in water to prepare an aqueous phase. The above-mentioned oil phase and aqueous phase were pre-emulsified by stirring with a homomixer at a temperature of 70°C for 15 minutes and then homogenized at homogenizing pressure of 1 MPa and sterilized at a temperature of 144°C for 4 seconds with a ultra-high temperature sterilization apparatus according to a direct heating method, followed by homogenizing at homogenizing pressure of 4 MPa and immediately cooling to a temperature of 5°C. After cooling, the resulting mixture was subject to aging for about 24 hours to obtain acidic cream. This creamy oil-in-water type composition was whipped to measure whipping time, overrun and graining time.

Table 3

| | Example 5 | Comparative Example 6 | Comparative Example 7 |
|---|---|---|---|
| Material names | Blending (%) | Blending (%) | Blending (%) |
| Acid-soluble soybean protein | 2.0 | - | - |
| Whey Protein Isolate | - | - | 2.0 |
| General Milk Protein | - | 2.0 | - |
| Fat | 45.0 | 45.0 | 45.0 |
| Citric acid | - | 0.7 | 0.7 |

Comparative Examples 6 and 7

Comparative Examples were carried out by replacing the acid-soluble soybean protein with General Milk Protein (trade name: TMP1100, manufactured by NZMP) or Milk Whey Protein Isolate (trade name: SUNLACT N5, manufactured by Taiyo Kagaku Co., Ltd.) and adding citric acid to the aqueous phase. In case of using General Milk Protein, the cream could not be used because of separation even though homogenizer treatment was carried out. In case of using Milk Whey Protein Isolate, the cream had poor whipping properties and strong acidity.

The results of evaluation of the acidic oil-in-water type emulsions prepared under the above conditions are shown in Table 4. Incidentally, shape-retention in Table 4 is the evaluation of whether the form is maintained without flagging when squeezed out by a squeezing bag in an optimum whipping state. As a result, although a frozen dessert cream mix using whey protein isolate was in a favorable state without separation during homogenization, it had poor whipping properties and bad workability, texture and shape-retention.

Table 4

| | Example 5 | Comparative Example 7 |
|---|---|---|
| Cream state | Favorable | Favorable |
| pH | 3.5 | 3.5 |
| Whipping time | 3 minutes | 1 minute |
| Overrun (%) | 90 | 70 |
| Graining time | 20 seconds | 3 seconds and short workable time |
| Texture | Smooth and fine-texture | Liable to be rough and coarse-texture |
| Shape-retention | Favorable | Tightened with time |
| Flavor | Plain and favorable | Milky taste hindering refreshing flavor |
| Flavor in mixing with mayonnaise | Light, plain and favorable | Milky taste not match with mayonnaise |

Examples 6 to 10

According to the same manner as that in Example 5, Examples 6 to 10 were carried out except for changing the amount of the acid-soluble soybean protein, the kind of fats (notes 1: blended hydrogenated oil of soybean oil and palm oil) or the kind and amount of emulsifying agents. As for all Examples, cream state (favorable), pH (3.5), texture (smooth and fine-grained), shape-retention (favorable), flavor (plain and favorable) and flavor in mixing with mayonnaise (light, plain and favorable) were the same results as those of Example 5.

In Table, PGE was polyglycerin fatty acid ester (trade name: SY-GLYSTER MO-3S, manufactured by Sakamoto Yakuhin Kogyo Co., Ltd.) whose main constituent fatty acid was oleic acid, and PGE and egg yolk oil (trade name: egg yolk lecithin PL-30, manufactured by Q.P. Corporation) were used by melting them in the oil phase.

Table 5

| | Example 5 | Example 6 | Example 7 | Example 8 | Example 9 | Example 10 |
|---|---|---|---|---|---|---|
| Material names | Blending (%) | Blending (%) | Blending (%) | Blending (%) | Blending (%) | Blending (%) |
| Acid-soluble soybean protein | 2.0 | 2.0 | 2.0 | 2.0 | 1.0 | 3.0 |
| Fat | 45.0 | 45.0 | 45.0 | 45.0 Note 1: Hydrogenated soybean palm oil | 45.0 | 45.0 |
| Egg yolk oil | - | - | 0.5 | - | - | - |

(continued)

| | Example 5 | Example 6 | Example 7 | Example 8 | Example 9 | Example 10 |
|---|---|---|---|---|---|---|
| Material names | Blending (%) | Blending (%) | Blending (%) | Blending (%) | Blending (%) | Blending (%) |
| Soybean lecithin | 0.2 | - | - | 0.4 | 0.1 | 0.2 |
| PGE | - | 0.03 | - | - | - | - |
| SE | 0.2 | 0.2 | - | 0.2 | 0.2 | 0.2 |
| Whipping time | 3 minutes | 2 minutes and 50 seconds | 2 minutes and 40 seconds | 5 minutes and 5 seconds | 2 minutes and 5 seconds | 4 minutes and 30 seconds |
| Overrun (%) | 90 | 100 | 102 | 115 | 80 | 90 |
| Graining time | 20 seconds | 20 seconds | 12 seconds | 50 seconds | 30 seconds | 12 seconds |

Example 11

According to Example 1, 1% by weight of acid-soluble soybean protein of Production Example 1, 25% by weight of coconut oil and residual water were homogenized (pH 3.5) and heated to obtain 5 parts by weight of cream, which was mixed with 95 parts by weight of an acidic beverage and subject to heat sterilization to obtain an acidic emulsified beverage. The heating conditions were at 80°C for 30 minutes, at 95°C for 30 minutes, at 120°C for 15 seconds, and at 140°C for 10 seconds. The heating at 120°C and 140°C was carried out with a UHT plate sterilizer. The acidic beverage was obtained by adjusting an aqueous solution containing 5.3% of 1/5 concentrated strawberry juice and 12% of sugar-mixed isomerized glucose syrup to pH 3.5 with citric acid.

The results were such that the acidic emulsified beverages of any heating conditions caused no separation and agglomeration, and were favorably and uniformly clouded, and exhibited profound appearance. These results showed that the acidic cream of this Example could be used as cloudy-imparting cream having favorable stability against heating in acidity. When the acidic emulsified beverage after heat sterilization was preserved at ordinary temperature for 2 weeks, no changes were observed.

The emulsified strawberry juice was so favorable as to have refreshing acidic flavor of strawberry as well as thick flavor of fats and protein.

Example 12

An acidic emulsified beverage with the same blending as Example 11 was produced by all-in-mix. Namely, an aqueous mixture containing 0.05 kg of the acid-soluble soybean protein prepared in Production Example 1, 1.25 kg of coconut oil, 5.0 kg of 1/5 concentrated strawberry juice and 11.4 kg of sugar-mixed isomerized glucose syrup was prepared. The mixture was heated to a temperature of 70°C and stirred for 15 minutes. Then, the mixture was homogenized with a homogenizer at 1 MPa and thereafter heat-treated with a continuous direct heating sterilization apparatus at a temperature of 120°C for 15 seconds to obtain emulsified strawberry juice. The emulsified strawberry juice obtained was so favorable as to have refreshing acidic flavor of strawberry as well as thick flavor of fats and protein as with Example 11.

Example 13

The cream mix sterilized after homogenization, which was obtained in Example 1, was spray-dried with a spray dryer (manufactured by Ishikawajima-Harima Heavy Industries Co., Ltd.) to obtain a powdery product (a moisture of 4.5%) of an oil-in-water type emulsifying composition. Water in an amount of twice by weight was added to this powdery product, followed by whipping with a whipper and freezing to obtain frozen dessert having a smooth mouthfeel.

Example 14

Emulsified citrus flavor jelly (as cloudy-imparting agent and emulsifying flavor)

Two kg of a solution (pH 3.5) containing 5% by weight of the acid-soluble soybean protein in Production Example 1, 1 kg of orange oil and 7 kg of water were mixed, heated to a temperature of 70°C and stirred for 15 minutes (the final oil content of 10%). Then, the mixture was homogenized with a homogenizer at 1 MPa and thereafter heat-treated with a continuous indirect heating sterilization apparatus at a temperature of 120°C for 15 seconds to obtain an acidic oil-in-water type emulsifying composition. The emulsion state of the oil-in-water type emulsifying composition was favorable.

Five parts by weight of this oil-in-water type emulsifying composition was mixed with 95 parts by weight of acidic citrus flavor jelly solution (80°C) separately prepared, and put into a heat-resistant vessel and heat-sealed, followed by subjecting to heat sterilization in a water bath at a temperature of 85°C for 30 minutes, and then cooling to obtain an emulsified citrus flavor jelly. The citrus flavor jelly solution was an aqueous solution composed of 11.6% by weight of granulated sugar, 4.5% by weight of lemon juice, 4.0% by weight of 1/5 concentrated orange juice and 0.74% by weight of agar, which solution was mixed with the emulsifying composition and then adjusted to pH 3.5.

The emulsified citrus flavor jelly had favorable cloudy and profound appearance. No agglomerate and separation of an oil component were observed even after heating in the water bath. No changes were observed during preservation at ordinary temperature for 2 weeks.

The emulsified citrus flavor jelly had a natural citrus refreshing flavor and favorable appearance with entirely imparted cloudy appearance.

## Claims

1. Acidic whipping cream, or its whipped or dried powdery product comprising as an essential component acid-soluble soybean protein.

2. The cream, or its whipped or dried powdery product according to claim 1, further comprising acidic taste substance.

3. The cream according to claim 1, wherein the cream or its whipped product is ice cream, soft ice cream, whipped cream, cloudy cream or cooking cream.

4. The dried powdery product according to claim 1, wherein the dried powdery product is that of high fat type, powdered whip type or powdered cream type.

5. The cream, or its whipped or dried powdery product according to claim 1, wherein pH is 2.0 to 4.5.

6. The cream, or its whipped or dried powdery product according to claim 5, wherein pH is 2.5 to 4.3.

7. A process for producing acidic cream, or its whipped or dried powdery produce which comprises subjecting a homogenized mixture of an aqueous phase and an oil phase, containing acid-soluble soybean protein to heat sterilization.

## INTERNATIONAL SEARCH REPORT

| | International application No. |
|---|---|
| | PCT/JP2004/019570 |

A. CLASSIFICATION OF SUBJECT MATTER
    Int.Cl⁷  A23G9/02, A23L1/19

According to International Patent Classification (IPC) or to both national classification and IPC

B. FIELDS SEARCHED

Minimum documentation searched (classification system followed by classification symbols)
    Int.Cl⁷  A23G9/02, A23L1/19

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2001-95497 A  (Fuji Oil Co., Ltd.),<br>10 April, 2001 (10.04.01),<br>Full text<br>(Family: none) | 1-7 |
| A | JP 2001-69920 A  (Fuji Oil Co., Ltd.),<br>20 March, 2001 (20.03.01),<br>Full text<br>(Family: none) | 1-7 |
| A | JP 4-311354 A  (Fuji Oil Co., Ltd.),<br>04 November, 1992 (04.11.92),<br>Full text<br>(Family: none) | 1-7 |

☒  Further documents are listed in the continuation of Box C.  ☐  See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"  later document published after the international filing date or priority date and not in conflict with the application but cited to understand the principle or theory underlying the invention

"X"  document of particular relevance; the claimed invention cannot be considered novel or cannot be considered to involve an inventive step when the document is taken alone

"Y"  document of particular relevance; the claimed invention cannot be considered to involve an inventive step when the document is combined with one or more other such documents, such combination being obvious to a person skilled in the art

"&"  document member of the same patent family

| Date of the actual completion of the international search<br>    23 March, 2005 (23.03.05) | Date of mailing of the international search report<br>    05 April, 2005 (05.04.05) |
|---|---|
| Name and mailing address of the ISA/<br>    Japanese Patent Office | Authorized officer |
| Facsimile No. | Telephone No. |

Form PCT/ISA/210 (second sheet) (January 2004)

**INTERNATIONAL SEARCH REPORT**

International application No.

PCT/JP2004/019570

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2003-333997 A  (Fuji Oil Co., Ltd.),<br>25 November, 2003 (25.11.03),<br>Full text<br>(Family: none) | 1-7 |

Form PCT/ISA/210 (continuation of second sheet) (January 2004)

**EP 1 728 437 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000014325 A
- WO 0267690 A
- JP 8154612 A
- JP 6078704 A
- JP 2000262236 A
- JP 60054635 A